# EUROPÄISCHE PATENTANMELDUNG

(11) **EP 2 937 643 A1**
(43) Veröffentlichungstag der Anmeldung: **28.10.2015**
(21) Anmeldenummer: 15160316.4
(22) Anmeldetag: 23.03.2015
(51) Int. Cl.: F24H 4/02, F24D 12/02, F24D 3/18

(54) **Monoblock-Heizungsanlage mit ausgelagertem Lüfter**

(30) Priorität: 01.04.2014 FR 1452847
(71) Anmelder: Robert Bosch GmbH, 70442 Stuttgart (DE)
(72) Erfinder: Trela, Marc, 94410 Saint-Maurice (FR); Au, Carine, 77000 Vauy-Le-Penil (FR); Auorou, Khaled, 93150 Le Blanc Mesnil (FR)

(57) **Zusammenfassung**

Monoblock-Heizungsanlage, die eine Luft/Wasser-Wärmepumpe (11) kombiniert mit einem Heizkessel (12) enthält, um einen Heizkreislauf (3) zu speisen. Die Wärmepumpe (11) weist einen Kondensator und einen Verdampfer auf, die in der Hülle (10) der Anlage untergebracht sind. Der Heizkreislauf (3) geht durch den Kondensator (13) der Wärmepumpe (11) und dann durch den mit der Wärmepumpe (11) kombinierten Heizkessel (12). Der Luftausgang der Wärmepumpe (11) ist über eine Leitung (112) mit einem aus der Hülle (10) ausgelagerten Lüfter (2) verbunden, der direkt in die freie Atmosphäre mündet.

## Beschreibung

### Gebiet der Erfindung

Die vorliegende Erfindung bezieht sich auf eine Monoblock-Heizungsanlage, die eine Wasser/Luft-Wärmepumpe enthält, kombiniert mit einem Heizkessel, um einen Heizkreislauf zu speisen, wobei die Wärmepumpe einen Kondensator und einen Verdampfer aufweist, die in der Hülle der Anlage untergebracht sind, wobei der Heizkreislauf durch den Kondensator der Wärmepumpe und dann durch den mit der Wärmepumpe kombinierten Heizkessel geht.

### Stand der Technik

Es gibt geteilte Wärmepumpen mit einem äußeren Verdampfer und einem inneren Kondensator. Diese Lösung erfordert aber den Kreislauf des Kältemittels zwischen den zwei Blöcken, was zu einer gewissen Anzahl von Nachteilen führt, wie demjenigen, der darin besteht, den Kältemittelkreislauf zwischen den zwei Teilen der so geteilten Wärmepumpe anzuordnen. Zum Zeitpunkt des Einbaus muss auf den Kältemittelkreislauf eingewirkt werden, wenn der Anschluss zwischen den zwei Teilen der Anlage gewährleistet wird und das Füllen mit Kältemittel vervollständigt werden muss.

Der Block des Verdampfers kann nicht beliebig eingebaut werden, und der den Verdampfer vom Kondensator trennende Abstand ist ebenfalls begrenzt. Außerdem bedingt die Kältemittelverbindung zwischen den zwei Teilen der Anlage einen genauen Verlauf.

Abschließend steht der Einbau einer solchen geteilten Wärmepumpe dem kompakten Monoblock-Aufbau entgegen, der von einer hybriden Heizungsanlage verwirklicht werden soll, die in einer einzigen Hülle die Wärmepumpe und den Heizkessel umfasst, der die Heizungsergänzung gewährleistet.

### Ziel der Erfindung

Die vorliegende Erfindung hat zum Ziel, eine hybride Monoblock-Heizungsanlage der oben definierten Art, deren Platzbedarf reduziert und deren Betrieb leiser ist, und insbesondere eine hybride Monoblock-Heizungsanlage zu entwickeln, die zur Ausstattung von Wohnungen oder Einfamilienhäusern geeignet ist.

### Darlegung und Vorteile der Erfindung

Zu diesem Zweck hat die Erfindung eine hybride Monoblock-Heizungsanlage der obigen Art zum Gegenstand, dadurch gekennzeichnet, dass der Luftausgang der Wärmepumpe über eine Leitung mit einem aus der Hülle ausgelagerten Lüfter verbunden ist, der direkt in die freie Atmosphäre mündet.

Die Auslagerung des Lüfters ermöglicht es, den Platzbedarf der im Wohnraum befindlichen Monoblock-Anlage zu verringern und ihr Betriebsgeräusch innerhalb des Raums zu verringern. Der in die Außenatomsphäre mündende, d.h. mit einem freien Ausgang versehene ausgelagerte Lüfter, der den üblicherweise in den Verdampfer eingebauten ersetzt, hat den Vorteil besserer Leistungen. Da er nicht durch das Volumen des Gehäuses der Monoblock-Anlage begrenzt ist, kann der Lüfter größer bemessen werden, um die Wirksamkeit der Wärmepumpe zu erhöhen.

Gemäß einem vorteilhaften Merkmal ist der ausgelagerte Lüfter außerhalb des Dachs eingebaut, so dass sein Betriebsgeräusch sich außerhalb des Gebäudes entwickelt. Der Lüfter wird vorteilhafterweise durch Funk oder Trägerstrom entsprechend dem Betrieb der Wärmepumpe gesteuert.

### Zeichnungen

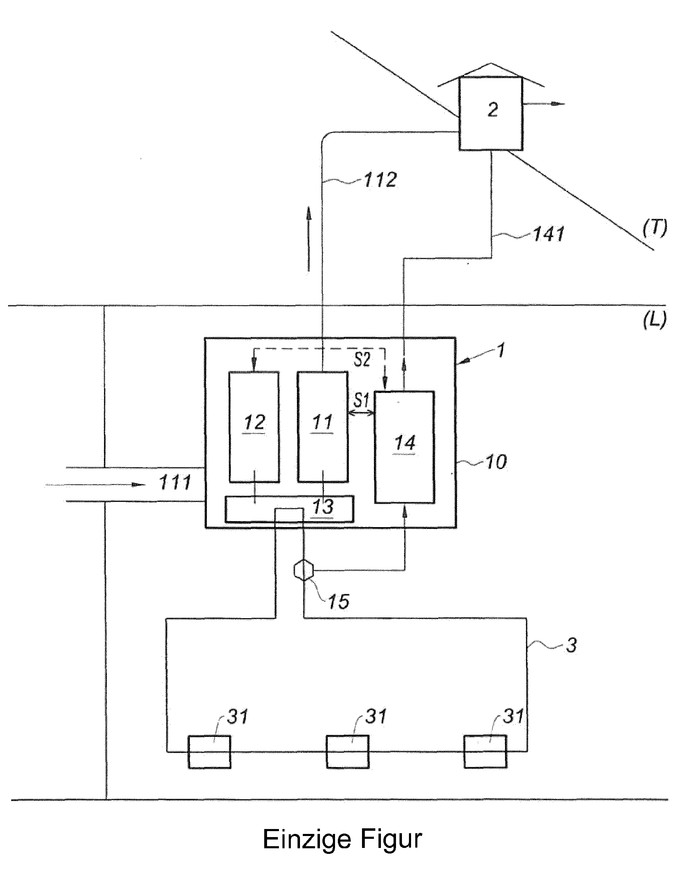

Die vorliegende Erfindung wird nachfolgend ausführlicher mit Hilfe der schematischen Darstellung einer hybriden Monoblock-Heizungsanlage beschrieben, die in der beiliegenden Zeichnung dargestellt ist, in der die einzige Figur ein Blockschaltbild der Anlage ist.

### Beschreibung einer Ausführungsform der Erfindung

Gemäß der Figur bezieht sich die Erfindung auf eine hybride Monoblock-Heizungsanlage 1 in einem Wohnraum (L). Diese hybride Heizungsanlage 1 besteht aus einer Hülle 10, in der eine Luft/Wasser-Wärmepumpe 11 und ein Heizkessel 12 untergebracht sind, der die von der Wärmepumpe gelieferte Heizleistung vervollständigt. Die Einheit (11, 12) wird von einem Steuerkreis 14 gesteuert, der mit Sensoren 15 verbunden ist und die Steuersignale S1, S2 der Wärmepumpe 11 und des Heizkessels 12 erzeugt. Diese Anlage speist einen Heizkreislauf 3, der aus Heizkörpern 31, einer Fußbodenheizung oder anderen Heizelementen besteht. Der Heizkreislauf 3 geht durch den Kondensator 13 der Wärmepumpe 11, innerhalb des Blocks 12 der Heizungsanlage 1.

Die Wärmepumpe 11 wird über einen Lufteingang oder einen Lufteintritt 111 mit Außen- oder Innenluft gespeist, und sie stößt die Luft durch eine Leitung 112 aus, die mit einem auf dem Dach (T) eingebauten ausgelagerten Lüfter 2 verbunden ist. Der ausgelagerte Lüfter 2 ist mit dem Steuerkreis 14 verbunden.

Der ausgelagerte Lüfter 14 befindet sich außerhalb des Dachs (T), so dass er die durch die ihn mit der Wärmepumpe 11 verbindende Leitung 112 angesaugte Luft direkt nach außen ausstößt.

Die erfindungsgemäße hybride Monoblock-Heizungsanlage wird äußerst einfach eingesetzt, da die einzigen durchzuführenden Anschlüsse diejenigen des Heizkreislaufs, der Lufteingang und die Abluftleitung sowie das Endgerät des Lüfters sind, der zum Beispiel auf dem Dach eingebaut ist. Die Steuerverbindung zwischen dem ausgelagerten Lüfter 2 und dem Steuerkreis 14 der Monoblock-Anlage 1 erfolgt entweder über eine direkte elektrische Verbindung oder durch Trägerstrom, der die Versorgungsleitung des Lüfters nutzt, oder durch Übertragung radialer Signale, wobei diese Verbindung schematisch durch eine Linie 141 dargestellt ist.

Die Regelung des Betriebs erfolgt durch den Steuerkreis 14, in den Betriebssollwerte wie die Betriebstemperatur, die Periodizität des Betriebs, die Zeitpläne oder der wöchentliche Betrieb usw. eingegeben werden.

Der Steuerkreis 14 kann zusätzlich zu der oder den auf dem Heizkreislauf 3 eingebauten Temperatursonden 15 auch mit einem Außenthermostat verbunden sein.

### BEZUGSZEICHENLISTE

- 1: Hybride Monoblock-Heizungsanlage
- 2: Ausgelagerter Lüfter
- 3: Heizkreislauf
31 Heizelement / Heizkörper / Fußbodenheizung
- 10: Hülle
- 11: Wärmepumpe
111 Lufteintritt
112 Abluftleitung
- 12: Heizkessel
- 13: Kondensator
- 14: Steuerkreis
141 Steuerleitung
- 15: Temperatursonde

## Patentansprüche

1. Monoblock-Heizungsanlage, die eine Luft/Wasser-Wärmepumpe (11) kombiniert mit einem Heizkessel (12) enthält, um einen Heizkreislauf (3) zu speisen,
wobei die Wärmepumpe (11) einen Kondensator und einen Verdampfer aufweist, die in der Hülle (10) der Anlage untergebracht sind,
wobei der Heizkreislauf (3) durch den Kondensator (13) der Wärmepumpe (11) und dann durch den mit der Wärmepumpe (11) kombinierten Heizkessel (12) geht,
wobei die Anlage **dadurch gekennzeichnet ist, dass** der Luftausgang der Wärmepumpe (11) über eine Leitung (112) mit einem aus der Hülle (10) ausgelagerten Lüfter (2) verbunden ist, der direkt in die freie Atmosphäre mündet.

2. Monoblock-Heizungsanlage nach Anspruch 1, **dadurch gekennzeichnet, dass**
der ausgelagerte Lüfter (2) durch Funk oder Trägerstrom gesteuert wird.

3. Monoblock-Heizungsanlage nach Anspruch 1, **dadurch gekennzeichnet, dass**
der ausgelagerte Lüfter (2) ein Endgerät bildet, das im Dach (T) außerhalb von diesem eingebaut ist.
